**Europäisches Patentamt**

(19) **European Patent Office**

**Office européen des brevets**

(11) Publication number : **0 402 000 B1**

(12) # EUROPEAN PATENT SPECIFICATION

(45) Date of publication of patent specification :
**17.03.93 Bulletin 93/11**

(51) Int. Cl.⁵ : **C09J 7/04**

(21) Application number : **90305526.7**

(22) Date of filing : **22.05.90**

(54) **Adhesive coated label laminates.**

(30) Priority : **06.06.89 GB 8913021**

(43) Date of publication of application :
**12.12.90 Bulletin 90/50**

(45) Publication of the grant of the patent :
**17.03.93 Bulletin 93/11**

(84) Designated Contracting States :
**AT BE CH DE DK ES FR GB GR IT LI LU NL SE**

(56) References cited :
**EP-A- 0 217 672**
**FR-A- 2 091 982**

(73) Proprietor : **SAMUEL JONES & CO. LIMITED**
**Butterfly House St. Neots**
**Huntingdon Cambridgeshire, PE19 4EE (GB)**

(72) Inventor : **Dean, George,**
**4 St. Cross Court, St. Cross Road**
**Winchester, Hampshire SO23 9PZ (GB)**

(74) Representative : **Maguire, Peter Albert et al**
**P.A. Maguire & Co. 12, The Broadway**
**St. Ives, Cambridge PE17 4BN (GB)**

## Description

This invention relates to label laminates, particularly pressure sensitive adhesive coated label laminates, coated with remoistenable adhesives.

Remoistenable adhesives are a class of adhesives which are normally not tacky and are rendered tacky (activated) by contact with water. Conventional gummed labels, adhesive postage stamps and gummed paper tape make use of remoistenable adhesives. Typically such remoistenable adhesives are based on gelatinized starch adhesives deposited to form a film of adhesive on a paper web. Continuous films of remoistenable adhesives, especially gelatinized starch are sensitive to changes in humidity in that as the humidity increases the starch absorbs water and swells. The paper substrate also absorbs water resulting in dimensional changes but to a different extent than the starch. This causes the adhesive coated paper to curl to an extent dependent on the ambient humidity. For many commercial applications, especially flat labels, this curl instability is undesirable.

Two techniques are in current use to try to obtain remoistenable gummed papers with acceptable curl stability. The first method is to coat the paper with a continuous film of adhesive and subsequently to mechanically break up the film. This latter step is known as gum breaking and is carried out by passing the coated paper over the edges of blades with the adhesive layer on the outside. Usually a pair of blades at right angles are used in succession, the paper passing diagonally over each to give a diamond shaped pattern of breaks in the adhesive film. Although this improves the humidity stability of the product it does not generally give a flat product. The second method is to deposit the remoistenable adhesive as a layer comprising a matrix of very fine particles on the substrate. This can be done by using a non-aqueous coating fluid in which the adhesive particles are not soluble. To bind the adhesive particles to the substrate the coating includes a binder such as polyvinyl acetate. One such method is described in published European Patent Application No. 0041482. These adhesives are known as particle gums and most commonly use gelatinized starch as the remoistenable adhesive. The second method generally produces better results than gum breaking but is more expensive in materials and equipment.

Remoistenable adhesive coated papers having little or no tendency to curl when the ambient humidity is changed i.e. papers that have good curl stability, are commonly described as being "flat". Among flat papers varying degrees of "flatness" may be recognized. A major reason for requiring good flatness in remoistenable, especially label, paper is that it, especially the non-gummed side, is often printed. A flat paper can be printed fairly readily, in contrast to a paper with poor flatness which is liable to curl substantially and be difficult to feed into a printing press, whether web fed or sheet fed. In extreme cases, as for example with papers having a continuous film of gum, the paper can "tube" i.e. curl to such an extent as to form a tube-like tangle which is effectively unusable as a substrate for printing. Commercially available gum-broken products may not tube but will normally not be flat enough to make printing them a straightforward matter. Solvent coated particle gummed label paper is usually flat enough for easy handling on a printing press but is relatively expensive to manufacture.

Pressure sensitive adhesives are adhesives which do not require specific activation in order to render them adhesive to the target substrate. Most commonly these adhesives are used in the form of coatings on a sheet material which can then be adhered, without further activation, to the target substrate. Typical examples include pressure sensitive adhesive tape and label materials. Because the pressure sensitive adhesive will form an adhesive bond to a substrate without activation, the adhesive coated material is normally protected from premature adhesion by being held in contact with a release surface. For pressure sensitive adhesive tapes based on polymeric films the release surface is usually the surface of the polymeric film remote from the adhesive coating thus enabling the tape to be conveniently stored in the form of a spirally wound roll. For other forms of pressure sensitive adhesive coated materials it is usual for the adhesive coated material to be adhered lightly to a separately provided release surface which is most commonly provided by a release coating typically of a silicone polymer on a backing substrate. Pressure sensitive adhesives are also sometimes referred to as "self-adhesives".

In the art of pressure sensitive adhesive coated products the combination of a backing sheet having a release surface (typically silicone coated) and, lightly adhered to the release surface, a top sheet coated with pressure sensitive adhesive, is typically known as a "label laminate" as the main use of the adhesive coated top sheet is as a label. For convenience this term is used herein to describe this type of product construction irrespective of the intended end use of the adhesive coated top sheet.

A major use of label laminates is to provide stick-on labels e.g. for envelopes, price tickets, etc., which can be written, typed or printed prior to use and at the point of use, detached from the backing sheet and applied to the target substrate by the end user. One end user application, which is not satisfied by such a simple construction, is the need to releasably stick to a substrate a pressure sensitive top sheet ('label') so that it is detachable for subsequent use. An example of this is continuous stationery for point of use printing of 'customer' details including a customer name and address label. (Doing this all on one form obviates the need for a separate label printer and 'merging' the labels with the correspondence). At the point of envelope "stuffing", the pressure sensitive label can be detached from the release surface on the correspondence and stuck to the outside of the envelope. In theory the continuous stationery could be 'spot' printed with a release coating and the label 'spot' laminated to it. In this case the 'theory' does not allow for the practical difficulties which are so great as to make it utterly impractical. One practical approach is to treat the label laminate itself as the top sheet in a label laminate in the following construction: true top sheet backcoated with pressure sensitive adhesive releasably adhered to a release coating on a first backing sheet itself backcoated with pressure sensitive adhesive releasably adhered to a release coating on a second backing sheet. In use, the first backing sheet is detached from the second backing sheet and can then be stuck to the continuous stationery using its pressure sensitive adhesive coating. This provides the pressure sensitive adhesive coated top sheet, in effect, releasably adhered to the continuous stationery, ready for printing and subsequent use. Not surprisingly this type of construction is known as a "piggyback" (pick-a-back) label laminate.

The disadvantage of this construction is that it requires two further coating and one laminating step, using conventional techniques, than needed to make a simple label laminate and is thus relatively expensive. For "spot" use on correspondence, where the value of the correspondence as a whole is much higher than that of the spot label, the gain in convenience in use can easily outweight this increased cost. However, where it is desired to use a piggyback label laminate as such, this extra cost has adversely affected the extent of use of such product constructions.

The present invention approaches the production of a piggyback style product with a simpler and, therefore, cheaper construction by combining two different adhesive technologies. The label laminate part of the product uses a pressure sensitive adhesive, but the adhesive on the back surface of the backing sheet is a remoistenable adhesive. In use the composite product is adhered to its first target substrate by wetting the remoistenable adhesive and sticking it to the target. This gives a pressure sensitive adhesive coated topsheet ready for use, releasably adhered, to the first substrate.

Conventional remoistenable adhesives are not satisfactory in this application. Continuous aqueous gum gives a product which can be far too curly (non-flat) and curl unstable to be practically useful even if the remoistenable adhesive layer is gum broken. Particle gum coatings would be the "obvious" candidates to provide such a product in a flat and curl stable form. Unfortunately in practice they do not work as might be expected because they are (non-aqueous) solvent coated and this requires base paper (the back side of the backing sheet) properties which are difficult to align with those required for or resulting from the release coating on the other side of the backing sheet or with the pressure sensitive adhesive in the label laminate (as is described in more detail below it is generally more convenient to coat the remoistenable adhesive onto the pre-manufactured label laminate).

However, we have found that the technology of direct dot coating of remoistenable adhesives provides a means of providing a satisfactory remoistenable adhesive on the back side of label laminates to give a piggyback product. Our European published patent application No. 0217672 A describes remoistenable adhesive dot coated paper products and their manufacture with particular reference to immediate label stock.

The present invention accordingly provides a label laminate comprising a top sheet having on its back side a coating of a pressure sensitive adhesive releasably laminated to a release surface on the top side of a paper backing sheet, the paper backing sheet carrying on its back side a discontinuous coating of a remoistenable adhesive in the form of discrete dots of the adhesive deposited directly onto and adherent to the back side of the paper backing sheet.

In this invention the substrate to which the dots of remoistenable adhesive are adhered is the back side of the release backing sheet of the label laminate. For use in this invention, the particular nature of the label laminate is not particularly critical. Certainly, we have obtained good results with conventional label laminate. Thus, the nature of the top sheet will be determined by the intended end use of the top sheet adhesive 'labels'. Typically, it will be a sheet of paper, polymeric film, foil or similar material. Usually it will have a substance (mass per unit area of sheet) of at least 50 grammes per square metre, although for paper it will typically be at least 70 grammes per square metre. There is no specific functional upper limit of substance for the coating substrate but paper would not usually have a substance greater than 100 grammes per square metre and films and foils probably not more than about 150 grammes per square metre on a cost basis although where "fancy" sheets of pressure sensitive adhesive material are being produced the effective substance can be higher.

The amount of pressure sensitive adhesive coated onto the back side of the top sheet will typically be in the range of 10 to 25 grammes per square metre. Trying to use less adhesive will make it difficult to achieve adequate adhesive performance and uniform coating and larger amounts are relatively expensive without offering any significant further benefit. Usually, the coatweight will be at least 12 grammes per square metre,

EP 0 402 000 B1

particularly between 14 and 20 grammes per square metre depending on the nature of the adhesive.

The pressure sensitive adhesive can be such as are conventionally used in label laminates. Within this broad range it can be 'permanent' or 'peelable' as these terms are understood in the art. We expect that the skilled man will have no especial difficulty in selecting a suitable adhesive to meet the particular requirement. As appropriate, the top sheet can be pre-coated to improve the 'key' of the pressure sensitive adhesive to it.

The backing sheet is of paper and has a release surface. Its substance is determined essentially by its function. Typically, it will be from 50 to 100 grammes per square metre. Lower substances tend not to be strong enough and higher substances relatively expensive. The release surface will normally, as is conventional in the art, be provided by a coating of a silicone polymer or a material providing similar release properties coated on the backing substrate. Such a coating of a silicone polymer will typically be from 0.5 to 10 grammes per square metre but usually not more than 2 grammes per square metre. Paper backing substrates having release surfaces such as are commonly used in the art may be used in the present invention.

It is a particular feature of the invention that the remoistenable adhesive coating on the back side of the paper backing sheet is in the form of discrete dots. By describing the dots as discrete we mean that each dot adheres to the paper backing sheet and is separate from and not adhered to adjacent dots. In particular it is desirable in achieving optimum curl stability that, so far as is consistent with the size of dots and the coatweight, which are discussed below, each dot is as far as possible from its neighbours. The practical way we have found to do this is to coat the paper backing sheet with a substantially regular array of the dots of adhesive. Thus, the use of regular arrays of dots for the coating forms a particular feature of the invention. The precise geometrical arrangement of dots is not of itself critical. However, arrays with high symmetry are advantageous as, for dots of the same size and overall number per unit area, they enable higher minimum distances between nearest neighbours. Square, offset square and, especially, hexagonal arrays are particularly efficient in this regard.

The dots of adhesive are deposited directly onto and are adherent to the paper backing sheet. In other words, the adhesive adheres to the base by virtue of its own adhesive properties and not those of a separate binder phase. As is described below, the process of the invention takes advantage of the remoistenable nature of the adhesive i.e. that it is tacky when wet, to coat the adhesive as an aqueous coating mix thus adhering it to the paper backing sheet. It is a particular advantage of the invention that the areas of the paper backing sheet surface lying between the dots (after allowing for dot spreading) are effectively undisturbed and we believe that this contributes substantially to the good curl stability that can be obtained.

The products of the present invention can be made to be flat so that printing them is not restricted by curling. To assist in this and to aid achieving good printability of the top side of the top sheet, it is desirable to keep the dots small. It is a particularly preferred feature of the invention that the average dot diameter is not more than 0.5 mm and the use of dots having diameters not more than 0.3 mm is particularly beneficial. Because, as is noted below, the adhesive coatweight varies directly with the size of the dots, the dot diameter will usually be at least 0.05 mm and more typically at least 0.1 mm. A particularly useful range is 0.1 to 0.25 mm.

In the present context dot "diameter" refers to the diameter of a circle with equal area. It is desirable that the dots are circular or approximately circular but may be triangular, rectangular or higher polygonal e.g. hexagonal, especially with rounded vertices, or elliptical or annular or other distorted but near circular shape. To remain near circular the ratio of maximum to minimum section through the centre of the dot will not usually be more than 2 and will normally be less than 1.5. We have obtained satisfactory results with square and circular dots. In practice, in manufacture the surface tension of the coating mix will tend to round off the dots.

The height of the dots has a bearing on the sheet characteristics, particularly coatweight. We have found that larger dots can be deposited to be thicker than smaller dots and, thus, proportionately give higher coatweights.

The main quantitative limit on coatweight is provided by the functional requirement that the amount of adhesive is at least sufficient to function effectively as a remoistenable adhesive to stick the label laminate to the target substrate. The minimum amount of adhesive needed for adequate functionality depends on the particular nature of the adhesive but will usually be at least 4 grammes per square metre. For adhesives based on synthetic polymers such as acrylics the coatweight can be in the range 4 to 6 grammes per square metre and for polyvinyl alcohol 7 to 15 particularly 8 to 12 grammes per square metre. Starch based adhesives will typically require 8 to 20 particularly 12 to 15 grammes per square metre. The upper limit on adhesive coatweight is technical in that it will not be so much that the dots of adhesive coalesce to form a continuous film and economic in that generally no more adhesive than is needed to provide the required product performance will be used.

As is noted above, there is a relationship between dot size and coatweight. Thus, changing only the dot size, it seems that with larger dots the dot can be made thicker giving a greater proportionate increase of coat-

4

weight than might otherwise be expected. Other factors, including the properties of the adhesive coating mix used and the operating conditions of the coater used also influence coatweight as also, plainly, does the dot to dot separation. As indicated above it is advantageous to use small dots and to achieve relatively high coatweights it is desirable to use high symmetry regular arrays with small dot to dot separation. Generally we have obtained good results using dot arrays having a ratio of dot diameter to minimum (edge to edge) dot spacing (in square or hexagonal arrays) of at least 1 with typical values being in the range 1.2 to 3, particularly 1.5 to 2.5. At even higher ratios it may be difficult to stop dot coalescence, which will prevent the dots being truly discrete. Using such close spacings the proportion of the surface of the paper under the dots is typically at least 25% but not usually more than 60% and particularly from 35 to 55%. Even with highly symmetrical regular arrays of dots using very much higher area coverage may lead to dot coalescence or filming of the adhesive.

As has been indicated above, a wide variety of remoistenable adhesives can be used in this invention including synthetic adhesives based on acrylic polymers, polyvinyl acetate or polyvinyl alcohol. The invention is particularly applicable to remoistenable adhesives based on starch, modified starch and starch derivatives, and especially dextrins, because flatness, or rather the lack of it, is an especial problem with starch adhesives. The invention is also particularly applicable when the adhesive is based on polyvinyl alcohol (PVOH). PVOH based adhesives are relatively more weight efficient i.e. less is generally needed to achieve a particular level of adhesion, than starch based adhesives. As is known the adhesive properties of PVOH remoistenable adhesives vary with varying molecular weight. Low molecular weight materials give good tack, high molecular weight materials give good adhesive strength and medium molecular weight materials give moderate tack and adhesive strength. High molecular weight PVOH's can give very high viscosities in water at relatively low solids and this may limit the amount of such materials used in the practice of this invention. Mixtures of adhesives can be used to obtain desired product properties or process characteristics.

Although we have successfully used adhesive coating mixes consisting solely of the adhesive polymer dissolved in water, it will be usual for the adhesive polymer(s) to be formulated with other components. We expect that materials such as biocides, flavourings and sweeteners will be included as desired according to the intended end use and that process aids such as defoamers or materials to inhibit stringing (see below) will be used as necessary. Other possible additives include humectants and plasticisers to protect the adhesive from excessive moisture loss during processing or storage. However, quantitatively, the major further components of the adhesive formulation will be fillers/pigments e.g. clay, the use of which is described in more detail below, and other polymeric constituents. The latter materials are exemplified by polyvinyl acetate (PVA) which can be included in starch/dextrin or PVOH based adhesives. The grades of PVA used in remoistenable adhesives will be those which are compatible with the adhesive polymers used. Grades of PVA are commercially available which are designed to be compatible with dextrin and PVOH remoistenable adhesives. The amount of PVA used in the adhesive formulation will be selected to achieve the desired properties on similar criteria to its use in conventional remoistenable adhesives. Typically, when used, it will comprise at least 10% by and up to as much as 80% but commonly 20 to 60% by weight of the polymeric components of the adhesive. Thus, although PVA is not by itself a remoistenable adhesive it can be the major (by weight) polymeric component of practical remoistenable adhesives. PVA will usually be provided to the coating mix as a latex and this may give an adventitious benefit as the presence of disperse phase particles (the PVA itself) will tend to reduce stringing (see below).

It is a particular feature of this invention that the adhesive coating is of discrete dots. In the coating process, the dots of adhesive coating mix will tend to spread between deposition on the paper backing sheet web and drying. Generally, the higher the viscosity of the coating mix, the less the dots of coating will spread. High viscosities can be achieved by using coating mixes using higher viscosity components e.g. higher molecular weight adhesives or adding thickeners, or by using relatively high solids contents in particular greater than 50% e.g. up to 70 or 75%. Such high solids contents also reduce the drying requirement and thus the interval between deposition and drying. Additionally, the coating mix will penetrate the backing sheet base but, although some base penetration is beneficial in adhering the individual dots to the base, undue base penetration may take the form of sub-surface spread, in extreme cases leading to merging of adjacent dots under the paper surface and giving inferior flatness even though on surface inspection the dots of adhesive on the surface appear separate. As with surface spread, spread by base penetration is reduced by using high viscosity, high solids coating mixes. A further advantage arising from the use of high solids and thus high viscosity coating mixes is that the amount of water applied to the backing sheet web is small as is the extent to which it wets the web. This reduces the extent to which the backing sheet web is affected by on-machine curl i.e. curl induced by the coating and drying process itself. This is advantageous in that it reduces the extent of on-machine decurling e.g. by controlled application of water to the non-coated side of the paper, necessary. Nevertheless, the relatively high substance of the label laminate and the nature of the pressure sensitive adhesive and the release surface (coating) increase the amount of decurling required to give a flat, as well as curl stable product, as compared with dot coatings of remoistenable adhesives onto 'plain' paper (as described in EP 0217672 A).

The coating of the product of this invention is deposited onto the paper web substrate from an aqueous coating mix to produce discrete dots of coating mix on the backing sheet web which are then dried. The dots are small and, especially where high solids coating mixes are used, the amount of water applied to the backing sheet web is correspondingly small. Accordingly, care may be needed to avoid overdrying the adhesive as such overdrying usually may have a deleterious effect on the operating characteristics of the remoistenable adhesive and may also adversely affect the pressure sensitive adhesive. We have particularly noted this adverse effect in the rate of remoistening and the rate at which the strength of the adhesive bond builds up.

We have obtained particularly good overall results in using adhesive compositions containing substantial amounts of hydrophilic clays e.g. china clay. The inclusion of small amounts e.g. up to 15% on a dry weight basis, of fillers such as clay in adhesives has long been known as economic extenders or rheology or process modifiers. The conventional wisdom is that the use of large proportions of filler result in a marked deterioration in adhesive performance. We have found nothing to suggest that the conventional view is not correct for conventional products especially where the adhesive is coated on the substrate as a film. However, in the context of this invention, the expected deterioration is absent or at least much less marked than would be expected.

We do not know why the inclusion of substantial amounts of clay does not have the expected deleterious effect, but we think it possible that the presence of the clay may make the adhesive less susceptible to overdrying or that it facilitates penetration of water into the adhesive during remoistening. We think it likely that the maximum adhesive strength of the adhesive will be less with clay present but, because the strength of the adhesive bond is likely to be greater than that of the paper substrate, this reduction is of little practical importance.

When used, the hydrophilic clay will be included typically as from 30 to 70% and especially 40 to 60%, dry weight basis, of the adhesive composition. Suitable clays include china clay and other forms of kaolin and similar clays. The use of clays in this way can contribute to high solids in the coating mix.

The remoistenable adhesive coated laminate can be made using process steps known in themselves. We have found that coating the remoistenable adhesive onto a pre-formed label laminate is a straightforward way of making the product. It would be possible, in principle, to coat the backing sheet with remoistenable adhesive, either before or after forming the release surface e.g. by silicone coating, on its other side, and then to use this in making the label laminate. However, this is more complex in process terms and, therefore, not particularly preferred. Thus, typically the label laminate will be made by silicone coating the paper backing sheet e.g. using a thermally curing 'solvent' silicone, 'solventless' silicone or radiation curing silicone process, the pressure sensitive adhesive is then coated onto the silicone coated release surface e.g. using aqueous, solvent, hot melt or radiation curing adhesives and dried or cured as necessary, followed by laminating the top sheet onto the adhesive coated release backing paper. This label laminate can then be dot coated with remoistenable adhesive, as described more fully below.

The product will normally be used in the form of sheets and for product made by continuously coating a continuous web, the web will be sheeted before use. In this case the product will usually be dot coated before sheeting. The label top sheet of a sheet of laminate according to the invention can be used as a single sheet or, more usually, it will be divided e.g. by die cutting, into individual small labels for use. Such individual labels will usually be die cut after dot coating but before sheeting. The label top sheet can contain printed information e.g. data common to the small labels on a single sheet.

We have found that the provision of the remoistenable adhesive coating of discrete dots can be carried out particularly effectively by using a screen printer to coat the dots onto the paper backing sheet web. In screen printing the shape of the printed area and the amount of ink deposited on the substrate are determined by a compound screen/stencil. The "screen" was originally of woven silk (hence "silk screen printing") but is now more usually a metal wire or synthetic plastics mesh either woven or formed of a perforated sheet.

For the application of coatings of remoistenable adhesive in this invention a continuous rotary screen will usually be used. In conventional continuous rotary screen printing, a stencil defines image areas with the rotary screen acting to meter the ink as in flat bed screen printing. In the present invention, the size of the discrete dots making up the coating and their spacing are comparable with typical rotary screen aperture size and spacing. Thus, a stencil will not usually be used to produce the dot coated products of this invention. In practice, we have found it desirable to use screens with smaller and usually more closely spaced apertures than are commonly used for screen printing on such equipment. Flat bed screens e.g. hand screens used for laboratory work, usually have relatively much finer screens than in continuous rotary screen equipment. Thus, if flat bed screens are used to produce the remoistenable adhesive coated product of this invention a stencil e.g. in the form of a resin layer impregnated into the screen, defining the dot coating pattern will usually be used. The use of a screen, particularly a continuous rotary screen, to make the dot coated product of this invention is referred to herein as "screen coating".

The equipment used to carry out continuous rotary screen coating typically comprises a driven cylindrical screen, usually a perforated, thin walled metal cylinder, and a driven backing roll. The web to be coated passes over or round the backing roll and through the "nip" between the screen and backing roll. Although the term "nip" is used the contact pressure is usually only adequate to maintain suitable contact between web and screen. A flexible squeegee blade, usually with a metal tip, is fitted inside the screen, with the blade tip pressed against the inside surface of the screen adjacent the length of the nip. Coating mix is introduced inside the screen to form a puddle between the squeegee blade and the inside of the screen. Rotation of the screen pushes the coating mix against the squeegee and screen and pushes it through the screen with the squeegee blade acting to meter the amount. The squeegee is adjustable to change the pressure applied to the blade and thus the force at the tip. An increase of pressure increases the amount of mix pushed through the screen and thus the coatweight applied to the backing sheet web. For constant dot spacing this will also increase dot diameter. Movement of the blade tip in relation to the nip can also affect coatweight. The flexibility and size of the squeegee blade can also be changed but this, as is the choice of screen, is more a matter of setting up than adjustment. We have also found that coatweight and dot size also tend to increase with increasing line speed, presumably because the blade tends to ride on a pool of mix which is pushed through the screen. As is mentioned above it is possible to vary the coatweight applied to the paper web using a particular combination of screen and adhesive coating mix by adjusting the operating conditions. This coatweight variation will usually be reflected in a corresponding change of dot size. Care may be needed when trying to increase the coatweight to avoid undue increase in dot size as might lead to coalescence of the dots.

The technique of rotary screen coating places requirements on the adhesive coating mix to ensure good runnability. These requirements are somewhat analogous to those for screen printing inks. The coating mix will usually have a fairly high viscosity, typically in the range 1500 to 12000 especially 2500 to 1 0000 cP Brookfield (Spindle No. 7 at 100 rpm) and will be moderately shear thinning. High viscosity at low shear helps to prevent the mix oozing through the screen apertures too far in advance of the squeegee blade. Under the squeegee blade the rate of shear is higher and shear thinning helps to ensure good transmission through the screen apertures under the blade and onto the paper backing sheet web. After deposition on the backing sheet web, the shear is again low, and restored high viscosity helps to prevent undue dot spread. If the mix were substantially thixotropic then the viscosity would remain low for a significant time after the shear was reduced and this would tend to promote dot spread and possibly lead to coalescence which is undesirable. The selection or design of suitable adhesive coating mixes is relatively straightforward within these general requirements although some trials may be needed to optimise conditions. The rheology of the adhesive coating mix can be varied by varying the solids content of the mix, higher solids contents generally give higher viscosities; by choice of the molecular weight of the adhesive used, higher molecular weights generally give higher viscosities; by choice of adhesive type or by adding viscosity modifiers e.g. high molecular weight polymers such as alkyl cellulose derivatives, to increase mix viscosity or low molecular weight polar molecules, such as urea, or lower molecular weight polymers e.g. low molecular weight PVOH, to reduce mix viscosity.

In addition to mix rheology, the behaviour of the adhesive coating mix at the film split on the outgoing side of the nip between paper backing sheet web and screen is important. As the screen is rotating fairly rapidly and the adhesive mix is relatively viscous there can be a tendency for the mix to form "strings" or to "spin". This is analogous to the behaviour of some screen printing inks. Mixes with this tendency are described as "long" and can be "shortened" by using lower molecular weight constituents or by incorporating phase boundaries into the mix e.g. by including emulsion droplets e.g. polymer latices, solid particles e.g. of clay or chalk, or incompatible compounds or polymers e.g. sodium alginate for dextrins. As might be expected, stringing will usually be worse under higher shear i.e. at higher machine speeds. The rheology and spinning characteristics of the coating mix need be less closely defined if coating is carried out using a flat bed screen coating device although the same general principles apply.

The following Examples illustrate the invention. All parts and percentages are by weight unless otherwise indicated. Brookfield viscosities were measured using a No. 7 spindle at 100 revs per minute (1.67 Hz) at the temperature stated.

In assessing the flatness and curl stability of the adhesive coated label laminates, the following method was used:

10 cm diameter circular samples of the paper are cut and exposed to test humidities, the relative humidities used are stated in the Examples. After conditioning at each test humidity for about 30 minutes the extent of curl of the samples is assessed by measuring the height of the circumference of the test sample above the centre. In making coated production a continuous coater, de-curling can be provided on-machine, either on- or off-line, to give product which is flatter than non- or hand-delcurled stock.

Adhesion was assessed by remoistening 10 cm sample strips of dot coated laminate and sticking them to a sheet of uncoated board. At various times after adhesion, strips were pulled from the board and the time at which the bond fails by failure of the board or strip paper base i.e. when fibres are torn from the paper or board, rather than failure within the remoistenable adhesive layer is noted as the 'adhesion time'.

## Proprietary Materials used in the Examples

| Trade Name or Designation | Description | Supplier |
|---|---|---|
| C23 | aqueous maize dextrin, 70% solids, Brookfield viscosity 18000 cP. | Laing-National |
| Gohsenol GL05 | Solid polyvinyl alcohol (low molecular weight) | Nippon Gohsei |
| Gohsenol GM14 | Solid polyvinyl alcohol (medium molecular weight) | Nippon Gohsei |
| Vinamul 3265 | 55% solids aqueous Ethylene-vinyl acetate copolymer emulsion | Vinyl Products (Vinamul Ltd.) |
| SPS | kaolin china clay (100%) | English China Clays |

Example 1

An aqueous remoistenable adhesive coating mix was made up from the following materials.

| Material | % by weight (dry basis) |
|---|---|
| Gohsenol GM14 | 5 |
| Gohsenol GL05 | 18 |
| Vinamul 3265 | 28 |
| SPS clay | 47 |
| Defoamer | 2 |

The coating mix was made up by dispersing the clay, polyvinyl alcohol and defoamer in water heating to complete solution of the PVOH and then adding the Vinamul ethylene-vinylacetate copolymer emulsion. The mix had a solids content of 45% and a Brookfield viscosity of ca. 9000 cp at 20°C. This mix was coated onto the back side of the backing sheet of A4 sheets of label laminate having a plurality of individual pressure sensitive adhesive coated labels, die cut from a continuous sheet, on the top side (Matchmaker copier labels sold by Wiggins Teape Paper Ltd.). The coating was carried out using a laboratory flat bed hand coating screen, having a screen of polyester monofilament fibres at 130 cm⁻¹ and an open area of 30%, and a cured resin stencil, impregnated into the screen, of a hexagonal array of circular holes at 19.75 cm⁻¹ and having an open area of 50%. The mix was dot coated to give a dry coatweight of 10 grammes per square metre. The dot coated label laminate was decurled by backwetting i.e. in this case wetting the top side of the label laminate, by hand and subsequent drying. The dots of remoistenable adhesive had an average diameter of ca. 0.3 mm and an average height of ca. 0.2 mm. A control sample (Example 1c) was also made using the same procedure but coating the adhesive as a continuous film at a coatweight of 10 grammes per square metre.

Example 1 and 1c were tested for adhesion, curl and curl stability in a cycling stability test (70-30-50% RH) with the results given in Table 1 below.

The coated laminates (both Examples 1 and 1c) had good adhesive properties, but curl and curl cycle testing showed that Example 1 had much less curl and greater curl stability than Example 1c.

Example 2

Example 1 was repeated using the following adhesive formulation:

| Material | % by weight (dry basis) |
|---|---|
| C23 Dextrin | 50 |
| SPS Clay | 50 |

The dry materials were dispersed in water and heated to ensure hydration of the dextrin. The mix had a solids content of 60% and a Brookfield viscosity of 6000 cp at 20°C. Dot coating to give a coatweight of 10 grammes per square metre was carried out as described in Example 1. The product had a similar geometry of an array of dots of remoistenable adhesive as for Example 1. Control Example 2c was made as described for 1c but using the coating mix of Example 2. Adhesion, curl and curl stability (70-30-50% RH) tests were carried out and the results are given in Table 1 below.

Example 3

Example 2 was repeated but using a non die cut sheet label laminate of label top sheet, (aqueous) acrylic permanent pressure sensitive adhesive, thermally durable solventless silicone layer and paper backing sheet manufactured by Samuel Jones and Co. Ltd. The dot coating had a similar geometry to that of Example 1. The results of adhesion, curl and curl stability (70-30-50% RH) testing are given in Table 1 below.

Example 4

This Example was as described for Example 1 but used a continuous web of the label laminate used in Example 3 rather than the sheet label laminate used in Example 1. The coating was laid down using a continuous rotary screen manufactured by Stork BV of Boxmeer, Netherlands. The rotary screen used was of nickel having a hexagonal array of approximately hexagonal holes at a spacing of 60 lines per linear inch (ca. 24 cm⁻¹). The screen was 0.13 mm thick and had a nominal open area of 14%. The adhesive coating mix was applied to the back side of the label laminate backing sheet, dried and decurled using an in-line steam shower on machine. The coating was of dots having an average diameter of 0.3 mm and a height of 0.3 mm, giving an area coverage of 54% and a coatweight of 10 grammes per square metre. The results of adhesion, curl and curl stability (70-50-30-50% RH) testing are given in Table 1 below.

## Table 1

| Example No. | Original Curl (mm) | Curl Stability ( mm)* | Adhesion (secs) |
|---|---|---|---|
| 1 | 4 | 10 | 40 |
| 1c | 14 | 18 | 40 |
| 2 | 5 | 7 | 45 |
| 2c | 18 | 21 | 40 |
| 3 | 5 | 12 | 50 |
| 4 | flat | 10 | 35 |

*   This measurement is the difference between the minimum and maximum curl recorded in the cycling test.

## Claims

1.  A label laminate comprising a top sheet and a paper backing sheet, a coating of a pressure sensitive adhesive on one side of the top sheet, a release surface on one side of the paper backing sheet, the pressure sensitive adhesive being releasably laminated to the release surface to secure the top sheet and the paper backing sheet together, characterised by the paper backing sheet carrying on its other side a discontinuous coating of a remoistenable adhesive in the form of discrete dots of the adhesive deposited directly onto the paper backing sheet.

2.  A label laminate according to claim 1, characterised in that the amount of pressure sensitive adhesive coated onto the top sheet is in the range of 10 to 25 grammes per square metre.

3.  A label laminate according to claim 2, characterised in that the amount of pressure sensitive adhesive coated onto the top sheet is in the range 14 to 20 grammes per square metre.

4.  A label laminate according to any preceding claim, characterised in that the discrete dots of remoistenable adhesive are disposed in a substantially regular array.

5.  A label laminate according to claim 4, characterised in that the array of dots is symmetrical.

6.  A label laminate according to claim 5, characterised in that the array comprises dots of the same size and overall number per unit area.

7.  A label laminate according to any preceding claim, characterised in that the average dot diameter is not more than 0.5 mm.

8.  A label laminate according to any preceding claim, characterised in that the average dot diameter is not more than 0.3 mm.

9.  A label laminate according to any preceding claim, characterised in that the average dot diameter is in the range 0.1 to 0.25 mm.

10. A label laminate according to any preceding claim, characterised in that the dots of remoistenable adhesive are screen printed on the paper backing sheet.

11. A label laminate according to any preceding claim, characterised in that the remoistenable adhesive is based on a synthetic polymer and in that the coatweight is in the range 4 to 6 grammes per square metre.

12. A label laminate according to any preceding claim, characterised in that the remoistenable adhesive is based on polyvinyl alcohol and in that the coatweight is in the range 7 to 15 grammes per square metre.

13. A label laminate according to any preceding claim, characterised in that the remoistenable adhesive is based on polyvinyl alcohol and in that the coatweight is in the range 8 to 12 grammes per square metre.

14. A label laminate according to any preceding claim, characterised in that the remoistenable adhesive is starch based and in that the coatweight in the range 8 to 20 grammes per square metre.

15. A label laminate according to any preceding claim, characterised in that the remoistenable adhesive is starch based and in that the coatweight in the range 12 to 15 grammes per square metre.

16. A label laminate according to any preceding claim, characterised in that the dot array has a ratio of dot diameter to minimum dot spacing of at least 1.

17. A label laminate according to any preceding claim, characterised in that the dot array has a ratio of dot diameter to minimum dot spacing in the range 1.2 to 3.

18. A label laminate according to any preceding claim, characterised in that the dot array has a ratio of dot diameter to minimum dot spacing in the range 1.5 to 2.5.

19. A label laminate according to any preceding claim, characterised in that the proportion of the surface of the paper under the dots is at least 25% but not more than 60%.

20. A label laminate according to any preceding claim, characterised in that the proportion of the surface of the paper under the dots is in the range from 35 to 55%.

21. A label laminate according to any preceding claim, characterised in that the remoistenable adhesive composition contains a substantial amount of hydrophilic clay.

22. A label laminate according to claim 21, characterised in that the hydrophilic clay is included in an amount from 30 to 70%, dry weight basis, of the adhesive composition.

23. A label laminate according to claim 21, characterised in that the hydrophilic clay is included in an amount from 40 to 60%, dry weight basis, of the adhesive composition.

**Patentansprüche**

1. Ein Etikettenlaminat, mit einem Vorderblatt und einem Papierrückblatt, einer Beschichtung mit druckaktivem Klebstoff auf einer Seite des Vorderblattes, einer Abzugsoberfläche auf einer Seite des Papierrückblattes, wobei der druckaktive Klebstoff abziehbar mit der Abzugsoberfläche laminiert ist, um das Vorderblatt und das Papierrückblatt sicher aneinander haften zu lassen, gekennzeichnet dadurch, daß das Papierrückblatt auf seiner anderen Seite eine nicht durchgehende Beschichtung aus Rückbefeuchtungsklebstoff in Form verteilter Klebstofftröpfchen trägt, die direkt auf das Papierrückblatt aufgebracht sind.

2. Ein Etikettenlaminat gemäß Anspruch 1, gekennzeichnet dadurch, daß die Menge des druckaktiven Klebstoffs, der als Beschichtung auf das Vorderblattes aufgebracht ist, zwischen 10 und 25 g/m² beträgt.

3. Ein Etikettenlaminat gemäß Anspruch 2, gekennzeichnet dadurch, daß die Menge des druckaktiven Klebstoffs, der als Beschichtung auf das Vorderblattes aufgebracht ist, zwischen 14 und 20 g/m² beträgt.

4. Ein Etikettenlaminat gemäß einem der vorhergehenden Ansprüche, gekennzeichnet dadurch, daß die verteilten Rückbefeuchtungsklebstofftröpfchen in einer im wesentlichen regelmäßigen Anordnung aufgebracht werden.

5. Ein Etikettenlaminat gemäß Anspruch 4, gekennzeichnet dadurch, daß die Tröpfchenanordnung symmetrisch ist.

6. Ein Etikettenlaminat gemäß Anspruch 5, gekennzeichnet dadurch, daß die Anordnung Tröpfchen der gleichen Größe und der gleichen Gesamtanzahl pro Flächeneinheit aufweist.

7. Ein Etikettenlaminat gemäß einem der vorhergehenden Ansprüche, gekennzeichnet dadurch, daß der durchschnittliche Durchmesser der Tröpfchen nicht größer als 0,5 mm ist.

8. Ein Etikettenlaminat gemäß einem der vorhergehenden Ansprüche, gekennzeichnet dadurch, daß der durchschnittliche Durchmesser der Tröpfchen nicht größer als 0,3 mm ist.

9. Ein Etikettenlaminat gemäß einem der vorhergehenden Ansprüche, gekennzeichnet dadurch, daß der durchschnittliche Durchmesser der Tröpfchen im Bereich zwischen 0,1 und 0,25 mm liegt.

10. Ein Etikettenlaminat gemäß einem der vorhergehenden Ansprüche, gekennzeichnet dadurch, daß die verteilten Rückbefeuchtungsklebstofftröpfchen mittels Siebdruck auf das Papierrückblatt aufgebracht werden.

11. Ein Etikettenlaminat gemäß einem der vorhergehenden Ansprüche, gekennzeichnet dadurch, daß der Rückbefeuchtungsklebstoff auf synthetischem Polymer basiert und daß das Beschichtungsgewicht zwischen 4 und 6 g/m$^2$ beträgt.

12. Ein Etikettenlaminat gemäß einem der vorhergehenden Ansprüche, gekennzeichnet dadurch, daß der Rückbefeuchtungsklebstoff auf Polyvinylalkohol basiert und daß das Beschichtungsgewicht zwischen 7 und 15 g/m$^2$ beträgt.

13. Ein Etikettenlaminat gemäß einem der vorhergehenden Ansprüche, gekennzeichnet dadurch, daß der Rückbefeuchtungsklebstoff auf Polyvinylalkohol basiert und daß das Beschichtungsgewicht zwischen 8 und 12 g/m$^2$ beträgt.

14. Ein Etikettenlaminat gemäß einem der vorhergehenden Ansprüche, gekennzeichnet dadurch, daß der Rückbefeuchtungsklebstoff auf Stärke basiert und daß das Beschichtungsgewicht zwischen 8 und 20 g/m$^2$ beträgt.

15. Ein Etikettenlaminat gemäß einem der vorhergehenden Ansprüche, gekennzeichnet dadurch, daß der Rückbefeuchtungsklebstoff auf Stärke basiert und daß das Beschichtungsgewicht zwischen 12 und 15 g/m$^2$ beträgt.

16. Ein Etikettenlaminat gemäß einem der vorhergehenden Ansprüche, gekennzeichnet dadurch, daß die Tröpfchenanordnung ein Verhältnis von Tröpfchendurchmesser zu minimalem Tröpfchenabstand aufweist, das mindestens 1 beträgt.

17. Ein Etikettenlaminat gemäß einem der vorhergehenden Ansprüche, gekennzeichnet dadurch, daß die Tröpfchenanordnung ein Verhältnis von Tröpfchendurchmesser zu minimalem Tröpfchenabstand aufweist, das im Bereich zwischen 1,2 und 3 liegt.

18. Ein Etikettenlaminat gemäß einem der vorhergehenden Ansprüche, gekennzeichnet dadurch, daß die Tröpfchenanordnung ein Verhältnis von Tröpfchendurchmesser zu minimalem Tröpfchenabstand aufweist, das im Bereich zwischen 1,5 und 2,5 liegt.

19. Ein Etikettenlaminat gemäß einem der vorhergehenden Ansprüche, gekennzeichnet dadurch, daß der Anteil der Papieroberfläche, der von den Punkten bedeckt wird, mindestens 25%, jedoch nicht mehr als 60% beträgt.

20. Ein Etikettenlaminat gemäß einem der vorhergehenden Ansprüche, gekennzeichnet dadurch, daß der Anteil der Papieroberfläche, der von den Punkten bedeckt wird, zwischen 35% und 55% liegt.

21. Ein Etikettenlaminat gemäß einem der vorhergehenden Ansprüche, gekennzeichnet dadurch, daß die Zusammensetzung des Rückbefeuchtungsklebstoffs einen wesentlichen Anteil an hydrophilem Ton enthält.

22. Ein Etikettenlaminat gemäß Anspruch 21, gekennzeichnet dadurch, daß der hydrophile Ton in einer Menge von 30 bis 70% der Trockenmasse der Klebstoffzusammensetzung zugegeben wird.

23. Ein Etikettenlaminat gemäß Anspruch 21, gekennzeichnet dadurch, daß der hydrophile Ton in einer Menge von 40 bis 60% der Trockenmasse der Klebstoffzusammensetzung zugegeben wird.


**Revendications**

1. Matériau composite pour étiquettes, comportant une feuille supérieure et une feuille support en papier, une couche d'un enduit adhésif sensible à la pression sur une face de la feuille supérieure, une couche à faible adhérence sur une face de la feuille support en papier, la couche d'enduit adhésif sensible à la pression étant appliquée par laminage de manière amovible sur la couche à faible adhérence pour fixer l'une à l'autre la feuille supérieure et la feuille support en papier, caractérisé en ce que la feuille support en papier porte sur son autre face une enduction discontinue d'adhésif réhumidifiable, constituée par des points séparés de cet adhésif qui sont déposés directement sur la feuille support en papier.

2. Matériau composite pour étiquettes selon la revendication 1, caractérisé en ce que la dose d'adhésif sensible à la pression appliqué sur la feuille supérieure est comprise entre 10 et 25 grammes par mètre carré.

3. Matériau composite pour étiquettes selon la revendication 2, caractérisé en ce que la dose d'adhésif sensible à la pression appliqué sur la feuille supérieure est comprise entre 14 et 20 grammes par mètre carré.

4. Matériau composite pour étiquettes selon l'une des revendications 1 à 3, caractérisé en ce que les points séparés d'adhésif réhumidifiable sont disposés d'une manière sensiblement régulière.

5. Matériau composite pour étiquettes selon la revendication 4, caractérisé en ce que les points sont disposés d'une manière symétrique.

6. Matériau composite pour étiquettes selon la revendication 5, caractérisé en ce que les points ont la même taille et sont en nombre égal par unité de surface.

7. Matériau composite pour étiquettes selon l'une des revendications 1 à 6, caractérisé en ce que le diamètre moyen des points ne dépasse pas 0,5 mm.

8. Matériau composite pour étiquettes selon l'une des revendications 1 à 7, caractérisé en ce que le diamètre moyen des points ne dépasse pas 0,3 mm.

9. Matériau composite pour étiquettes selon l'une des revendications 1 à 8, caractérisé en ce que le diamètre moyen des points est compris entre 0,1 mm et 0,25 mm

10. Matériau composite pour étiquettes selon l'une des revendications 1 à 9, caractérisé en ce que les points d'adhésif réhumidifiable sont appliqués par sérigraphie sur la feuille support en papier.

11. Matériau composite pour étiquettes selon l'une des revendications 1 à 10, caractérisé en ce que l'adhésif réhumidifiable est à base d'un polymère synthétique, et en ce qu'on l'applique à une dose comprise entre 4 et 6 grammes par mètre carré.

12. Matériau composite pour étiquettes selon l'une des revendications 1 à 11, caractérisé en ce que l'adhésif réhumidifiable est à base d'un alcool de polyvinyle, et en ce qu'on l'applique à une dose comprise entre 7 et 15 grammes par mètre carré.

13. Matériau composite pour étiquettes selon l'une des revendications 1 à 12, caractérisé en ce que l'adhésif réhumidifiable est à base d'un alcool de polyvinyle, et en ce qu'on l'applique à une dose comprise entre 8 et 12 grammes par mètre carré.

**14.** Matériau composite pour étiquettes selon l'une des revendications 1 à 13, caractérisé en ce que l'adhésif réhumidifiable est à base d'amidon, et en ce qu'on l'applique à une dose comprise entre 8 et 20 grammes par mètre carré.

**15.** Matériau composite pour étiquettes selon l'une des revendications 1 à 14, caractérisé en ce que l'adhésif réhumidifiable est à base d'amidon, et en ce qu'on l'applique à une dose comprise entre 12 et 15 grammes par mètre carré.

**16.** Matériau composite pour étiquettes selon l'une des revendications 1 à 15, caractérisé en ce que les points sont disposés de telle manière que le rapport entre le diamètre des points et l'intervalle minimum entre ceux-ci soit au moins égal à 1.

**17.** Matériau composite pour étiquettes selon l'une des revendications 1 à 16, caractérisé en ce que la disposition des points est telle que le rapport entre le diamètre des points et l'intervalle minimum entre ceux-ci se trouve compris entre 1,2 et 3.

**18.** Matériau composite pour étiquettes selon l'une des revendications 1 à 17, caractérisé en ce que la disposition des points est telle que le rapport entre le diamètre des points et l'intervalle minimum entre ceux-ci se trouve compris entre 1,5 et 2,5.

**19.** Matériau composite pour étiquettes selon l'une des revendications 1 à 18, caractérisé en ce que la proportion de la surface du papier recouverte par les points est au minimum de 25% mais ne dépasse pas 60%.

**20.** Matériau composite pour étiquettes selon l'une des revendications 1 à 19, caractérisé en ce que la proportion de la surface du papier recouverte par les points est comprise entre 35 et 55%.

**21.** Matériau composite pour étiquettes selon l'une des revendications 1 à 20, caractérisé en ce que la composition de l'adhésif réhumidifiable contient une quantité substantielle d'argile hydrophile.

**22.** Matériau composite pour étiquettes selon la revendication 21, caractérisé en ce que la proportion pondérale d'argile hydrophile, mesurée à sec dans la composition de l'adhésif, est comprise entre 30 et 70%.

**23.** Matériau composite pour étiquettes selon la revendication 21, caractérisé en ce que la proportion pondérale d'argile hydrophile, mesurée à sec dans la composition de l'adhésif, est comprise entre 40 et 60%.